# EUROPÄISCHE PATENTSCHRIFT

(11) **EP 0 789 666 B1**
(45) Veröffentlichungstag und Bekanntmachung des Hinweises auf die Patenterteilung: **13.10.1999**
(21) Anmeldenummer: 96937170.7
(22) Anmeldetag: 30.08.1996
(51) Int. Cl.: C01B 13/11

(54) **VORRICHTUNG ZUR ERZEUGUNG VON OZON**
DEVICE FOR GENERATING OZONE
DISPOSITIF DE PRODUCTION D'OZONE

(30) Priorität: 02.09.1995 DE 19532526
(43) Veröffentlichungstag der Anmeldung: 20.08.1997
(73) Patentinhaber: Wedeco Umwelttechnologie Wasser-Boden-Luft GmbH, D-32501 Herford (DE)
(72) Erfinder: RAU, Stephan, D-32107 Bad Salzuflen (DE); SHADIAKHY, Abdol, Hossein, D-50259 Puhlheim (DE); BLAICH, Lutz, D-50735 Köln (DE)
(74) Vertreter: Bauer, Wulf, Dr.
(86) Internationale Anmeldenummer: DE9601612
(87) Internationale Veröffentlichungsnummer: WO9709268

(56) Entgegenhaltungen:
- EP-A- 0 515 111
- WO-A-93/16001
- DE-A- 3 819 304
- US-A- 4 232 229
- CHEMICAL ABSTRACTS, vol. 117, no. 24, 14.Dezember 1992 Columbus, Ohio, US; abstract no. 236654b, XP002006885 & ES,A,2 027 892 (INGENIERIA Y TECHNICA DEL SECADO) 22 Januar 1991
- PATENT ABSTRACTS OF JAPAN Bd. 13, Nr. 241 (C-604) <3589> 06 Juni 1989 & JP,A,01 051 303 (SACHIKO OKAZAKI) 27 Februar 1989
- PATENT ABSTRACTS OF JAPAN Bd. 2, Nr. 93 (C-78) 29 Juli 1978 & JP,A,53 054 190 (HITACHI SEISAKUSHO K.K.) 17 Mai 1978

## Beschreibung

Die Erfindung betrifft eine Vorrichtung zur Erzeugung von Ozon gemäß dem Oberbegriff des Anspruchs 1.

Ozon ist ein starkes Oxidationsmittel für organische Substanzen und für anorganische Verbindungen, welche Elemente mit mehreren Oxidationsstufen enthalten. Von den vielfältigen Anwendungsgebieten für Ozon ist unter anderem der Einsatz bei der Wasseraufbereitung zu erwähnen.

Technisch läßt sich Ozon durch stille elektrische Entladung in einem sauerstoffhaltigen Gas erzeugen. Unter stiller elektrischer Entladung wird im Gegensatz zu einer Funkenentladung eine stabile Plasmaentladung oder Koronaentladung verstanden. Dabei wird molekularer Sauerstoff in atomaren Sauerstoff dissoziiert. Die reaktionsfreudigen Sauerstoffatome lagern sich dann in einer exothermen Reaktion an molekularen Sauerstoff an und bilden drei-atomige Sauerstoffmoleküle, also Ozon. Die Ozonausbeute ist unter anderem von der elektrischen Feldstärke und der Betriebstemperatur abhängig. Außerdem wurde eine Abhängigkeit von der Gaszusammensetzung beobachtet. Die Abhängigkeit von der Betriebstemperatur beruht darauf, daß Ozon bei höheren Temperaturen schneller wieder zu molekularem Sauerstoff zerfällt und durch die dadurch bedingte Verschiebung des Gleichgewichts zwischen entstehendem und zerfallendem Ozon die verfügbare Ozonkonzentration geringer ist.

Höhere Feldstärken, die ebenfalls zu einer erhöhten Ozonausbeute führen, können u.a. durch eine Verringerung des Spaltes und durch die Auswahl von Dielektrika mit höherer relativer Dielektrizitätskonstante erzielt werden. Für Dielektrika mit hoher relativer Dielektrizitätskonstante kommen dotierte Gläser oder keramische Materialien in Frage. Allerdings haben Dielektrika aus keramischen Materialien den Nachteil, daß sie inhomogen sind und praktisch eine geringere Durchschlagsfestigkeit als homogene Materialien haben können. Darüber hinaus sind hochwertige keramische Materialien als Formkörper mit hoher Maßhaltigkeit extrem teuer. Dünnere Dielektrika erhöhen darüber hinaus das Risiko eines dielektrischen Durchschlags.

Einer Verringerung des Spalts sind Grenzen gesetzt durch unvermeidbare Fertigungstoleranzen sowie Biegungen und Verwerfungen durch mechanische Belastungen und Wärmeausdehnung im Betrieb.

Da eine Feldstärkeerhöhung durch Verringerung der Spaltbreite und Verwendung von Dielektrika mit großer Dielektrizitätskonstante zu einem erheblichen Anstieg der Herstellungskosten führt, sind hier wirtschaftliche Grenzen gesetzt.

Eine Vorrichtung der eingangs genannten Art ist aus der WO 93/16001 bekannt. Die elektrisch leitfähige und wärmeleitfähige, gasdurchlässige Anordnung wird dabei von einer Masse schraubenförmiger Windungen gebildet, die eine Serie von gekrümmten Oberflächen ausbilden, zwischen denen und der benachbarten Elektrode eine elektrische Koronaentladung ausgebildet wird. Die vorbekannte Vorrichtung ist im wesentlichen zylindersymmetrisch ausgeführt. Dabei bildet in allen Ausführungsbeispielen die Anordnung zusammen mit einem in ihr liegenden Leiter die Innenelektrode. Dieser Leiter ist ein Draht oder ein Rohr, er ist mechanisch am rohrförmigen Dielektrikum angeordnet und zentriert. Die Anordnung selber ist eine Füllung, die keine Zentrieraufgaben hat.

Aus der JP 1-51303 und Patent Abstracts of Japan, Vol. 13, No. 21 (C-604) [3589] ist eine Vorrichtung der eingangs genannten Art bekannt, die ebenfalls im wesentlichen zylindersymmetrisch ausgeführt ist. Zwei Rohre werden durch randseitige Abstandshalter gegeneinander zentriert gehalten. Der zwischen ihnen befindliche ringförmige Spalt ist durch die Anordnung gefüllt, die als Füllmaterial beschrieben ist. Sie ist unregelmäßig angeordnet, was bei einem Füllmaterial zwangsläufig der Fall ist und hat nicht die Aufgabe einer mechanischen Zentrierung des inneren Rohrs im äußeren Rohr.

Ausgehend von diesem Stand der Technik liegt der Erfindung die Aufgabe zugrunde, die Vorrichtung der eingangs genannten Art dahingehend zu verbessern, daß die Ozonausbeute bei vergleichbarem Energieeinsatz gesteigert werden kann.

Diese Aufgabe wird bei einer Vorrichtung nach dem Oberbegriff des Anspruchs 1 durch die im Kennzeichen angegebenen Merkmale gelöst.

Der Erfolg der Erfindung beruht auf mehreren physikalischen Einflüssen.

Durch die elektrisch leitfähige und wärmeleitfähige gasdurchlässige Anordnung wird erreicht, daß bei erzwungener Kühlung der Elektroden auch die durch die Entladung sowie durch die exotherme Reaktion des atomaren mit dem molekularen Sauerstoff entstehende Wärme im Spalt zwischen der Elektrode und dem Dielektrikum sowie aus dem Dielektrikum besser abgeführt wird, da einmal eine direkte wärmeleitende Verbindung zwischen der Elektrode und dem Dielektrikum besteht und zum anderen die Wärmeübergangsfläche zum durchströmenden Gas wesentlich erhöht wird, während der Wärmeübergangsweg zu sämtlichen Punkten innerhalb des Spaltes verringert ist. Da Ozon die Tendenz hat, mit zunehmender Temperatur wieder zu zerfallen und sich somit ein temperaturabhängiges Gleichgewicht zwischen Ozon- und Sauerstoffgehalt einstellt, kann durch wirksame Kühlung der Zerfall von Ozon vermindert und dadurch die Ausbeute verbessert werden.

Im Gegensatz zu einem normalen Spalt, den das sauerstoffhaltige Gas und das erzeugte Ozon in nahezu laminarer Strömung durchströmt, wird durch die elektrisch leitfähige und wärmeleitfähige gasdurchlässige Anordnung eine turbulente Strömung im Spalt erzwungen mit der Folge, daß die Gasmoleküle auch immer wieder an die Oberfläche der direkt kühlbaren Elektroden gelangen und dadurch die Wärme besser abgeben können.

Eine weitere Verbesserung der Ozonausbeute ergibt sich durch die mittels der elektrisch leitfähigen und wärmeleitfähigen gasdurchlässigen Anordnung vergrößerte Elektrodenoberfläche und effektive Verkleinerung des Spaltes. Durch die elektrisch leitfähige und wärmeleitfähige gasdurchlässige Anordnung steht nun nicht mehr nur die Oberfläche der Elektrode selbst zur Entladung zur Verfügung, sondern auch die Oberfläche der Anordnung und deren ionisierte Umgebung.

Außerdem wird durch die Anordnung, die den realen Spalt ausfüllt, ein kleinerer, lokal unterschiedlicher elektrisch wirksamer Spalt erzielt. Die lokalen Felder ändern sich dadurch erheblich und häufig entlang der Wegstrecke des durchströmenden Gases und es wird eine gute Ausbeute an ozonhaltigem Gas erzielt.

Neben der reinen Oberflächenvergrößerung und der Spaltverkleinerung kommt aber noch ein physikalischer Effekt hinzu, der als Hohlkathodeneffekt bezeichnet wird und üblicherweise bei der Erzeugung großflächiger homogener Plasmen unerwünscht ist.

Bei dem Hohlkathodeneffekt handelt es sich um eine intensive plasmaentladung innerhalb eines Hohlraums, der vom gleichen Potential umgeben ist. Bei der vorliegenden Erfindung wird dieser Effekt aber vorteilhaft ausgenutzt, da die Hohlräume untereinander in Verbindung stehen und somit das innerhalb der Hohlräume verstärkt erzeugte Ozon auch weitertransportiert werden kann. Der Hohlkathodeneffekt führt also zu einer größeren Steigerung der Ozonbildung, als allein durch die vergrößerte Oberfläche der elektrisch leitfähigen und wärmeleitfähigen gasdurchlässigen Anordnung und die Verringerung des partiellen Spaltabstandes zu erwarten wäre.

Die elektrisch leitfähige und wärmeleitfähige gasdurchlässige Anordnung führt auch zu einer besseren Gasvermischung. Dadurch erhöht sich auch die Wahrscheinlichkeit, daß die Sauerstoffmoleküle durch das elektrische Feld dissoziiert werden und die entstehenden Sauerstoffatome anschließend die Bindung mit molekularem Sauerstoff zu Ozon eingehen. Auch durch diesen Effekt wird die Ozonausbeute erhöht.

Statt lediglich eines Spaltes können auch zwei Spalte vorgesehen sein, die zwischen einer ersten Elektrode und einer zweiten Elektrode angeordnet und durch ein gemeinsames Dielektrikum getrennt sind. Beide Spalte sind durch je eine elektrisch leitfähige und wärmeleitfähige gasdurchlässige Anordnung ausgefüllt. Dies ist eine besonders wirtschaftliche Lösung zur Erhöhung der Ozonausbeute, da eine Verdoppelung der Spalte ohne Verdoppelung der Elektroden und des Dielektrikums erzielt wird.

Eine erste Ausführungsform der Erfindung sieht vor, daß die erste und zweite Elektrode und das Dielektrikum plattenförmig ausgebildet sind. Die elektrisch leitfähige und wärmeleitfähige gasdurchlässige Anordnung dient hier als Abstandhalter.

Bei einer alternativen Ausgestaltung der Erfindung sind die erste und zweite Elektrode sowie das Dielektrikum zueinander zylindersymmetrisch ausgebildet. Dabei ist das Dielektrikum in einem von der ersten Elektrode umschlossenen Raum angeordnet und die zweite Elektrode ist in einem vom Dielektrikum umschlossenen Raum angeordnet. Auch hier wird die elektrisch leitfähige und wärmeleitfähige gasdurchlässige Anordnung als Abstandhalter und vorzugsweise auch zur Zentrierung verwendet.

Bei der zylindersymmetrischen Ausgestaltung der erfindungsgemäßen Vorrichtung ist eine Ausführung der zweiten Elektrode mit polygonaler Oberfläche vorteilhaft. Die Montage der elektrisch leitfähigen und wärmeleitfähigen gasdurchlässigen Anordnung wird dann erleichtert, da beim Überstreifen der zweiten Elektrode die Reibungskräfte geringer sind als bei einer kreisförmigen Oberfläche. Die Anordnung kann vielmehr in die flachen Bereiche zwischen den Kanten ausweichen, wenn radikale Kräfte wirksam werden oder Abweichungen in der geradlinigen Ausrichtung oder dem Durchmesser des Dielektrikums oder der Elektrode auftreten.

Die zweite Elektrode kann massiv oder hohl ausgebildet sein. Bei der massiven Ausbildung steht ein großer Querschnitt für die Wärmeableitung in axialer Richtung zur Verfügung, während die hohle Ausführung eine Kühlung mittels eines Kühlmediums ermöglicht.

Vorzugsweise ist die erste Elektrode in einem Kühlmedium angeordnet. Durch eine erzwungene Kühlung kann auch bei hoher Verlustleistung im Spalt der für eine hohe Ozonausbeute nötige Temperaturbereich eingehalten werden. Diese Maßnahme ist besonders bei einem außerhalb des Dielektrikums liegenden Spalt wirksam.

Die Wärmeabfuhr der zweiten Elektrode kann verbessert werden, wenn im Falle ihrer hohlen Ausbildung der hohle Bereich von einem Kühlmedium durchströmt wird. Diese Maßnahme ist besonders bei einem innerhalb des Dielektrikums liegenden Spalt wirksam. Bei zwei Spalten werden optimale Ergebnisse erzielt, wenn sowohl die erste Elektrode in einem Kühlmedium angeordnet ist und die zweite Elektrode von einem Kühlmedium durchströmt wird.

Statt einer zweiten starren Elektrode kann der Innenraum des zylindrischen Dielektrikums vollständig mit der elektrisch leitfähigen und wärmeleitfähigen gasdurchlässigen Anordnung gefüllt sein und diese Anordnung kann gleichzeitig die zweite Elektrode bilden. Auf diese Weise läßt sich eine besonders anpassungsfähige Kombination aus Elektrode und elektrisch leitfähiger und wärmeleitfähiger gasdurchlässiger Anordnung erzielen.

Im Falle einer Vorrichtung mit zwei Spalten können diese bezüglich des Gasstromes parallel oder in Serie geschaltet sein. Bei Parallelschaltung ergibt sich ein größerer Strömungsquerschnitt, während bei Serienschaltung ein längerer Reaktionsweg zur Verfügung steht

Die elektrisch leitfähige und wärmeleitfähige gasdurchlässige Anordnung kann Späne, Granulat Draht oder poröse Körper umfassen, wobei die Drahtausführung wiederum ein Gewirr, Geflecht, Gewebe, Vlies oder Gestrick sein kann.

Bei Verwendung von Granulat kann es sich auch um poröses Granulat handeln, wodurch auch die Oberfläche der inneren Hohlräume zur Ozonbildung ausgenutzt werden kann.

Weiterhin ist es möglich, statt Granulat auch mehrere an den Spalt angepaßte poröse Körper oder einen einteiligen porösen Körper zu verwenden. Dieser Körper kann gesondert in den Spalt eingesetzt werden, mit der zum Spalt weisenden Elektrode verbunden sein oder auch integral an der Oberfläche der Elektrode ausgebildet sein.

Es hat sich herausgestellt, daß ein Drahtgestrick besonders vorteilhaft ist, da dies reproduzierbar herstellbar ist und dadurch auch die Eigenschaften des Ozonerzeugerelementes präzise reproduzierbar sind.

Bei der zylindersymmetrischen Ausbildung der Vorrichtung kann das Gestrick in strumpfartiger Form hergestellt werden und bei der Montage einfach über die zweite Elektrode, d.h. die Innenelektrode und/oder über das Dielektrikum gezogen werden. Dabei übernimmt das Gestrick auch die Zentrierung der Innenelektrode gegenüber dem Dielektrikum und des Dielektrikums gegenüber der ersten Elektrode, d.h. der Außenelektrode, so daß auf die Benutzung der sonst üblichen Zentrierelemente verzichtet werden kann.

Eine praktische Ausgestaltung der erfindungsgemäßen Vorrichtung sieht vor, daß die elektrisch leitfähige und wärmeleitfähige gasdurchlässige Anordnung etwa 1 bis 50 %, vorzugsweise 4 bis 20 % des Spaltvolumens ausfüllt. Bei Verwendung von Draht weist dieser zweckmäßig eine Querschnittfläche kleiner als 0,2 mm², vorzugsweise kleiner 0,03 mm² auf.

Durch Anpassung der Maschenzahl, Maschengröße, Drahtstärke sowie der Gestrickdicke, der Anzahl der verstrickten Drähte und der Anzahl der Gestricklagen lassen sich so der Strömungswiderstand der Anordnung einstellen, die Größe der Entladungsräume an maximale Ozonproduktion anpassen, die Verwirbelung und Durchmischung des Gases einstellen und die Kühlung und Wärmeabfuhr optimieren. Bei zwei parallelen Spalten können diese so auch auf optimale Ozonausbeute angepaßt werden.

Zweckmäßig besteht die elektrisch leitfähige und wärmeleitfähige gasdurchlässige Anordnung aus sauerstoff- und ozonbeständigem Material. Diese Maßnahme sorgt für gleichbleibende ozonerzeugende Eigenschaften und Wartungsfreiheit.

Nachfolgend wird die Erfindung anhand von Ausführungsbeispielen beschrieben, die in der Zeichnung dargestellt sind. In der Zeichnung zeigen:
- Fig. 1: einen Schnitt durch eine prinzipielle, gegebenenfalls zylindrische oder plattenförmige Vorrichtung der Erfindung mit einem Spalt,
- Fig. 2: einen Schnitt durch eine prinzipielle, gegebenenfalls zylindrische oder plattenförmige Vorrichtung der Erfindung mit zwei Spalten,
- Fig. 3: eine perspektivische schnittbildliche Darstellung einer Vorrichtung in zylindersymmetrischer Ausgestaltung mit einer massiven Innenelektrode,
- Fig. 4: eine perspektivische schnittbildliche Darstellung einer Vorrichtung ähnlich Figur 3, jedoch mit hohler Innenelektrode und
- Fig. 5: eine perspektivische schnittbildliche Darstellung ähnlich Figur 3 und 4, jedoch mit einer gasdurchlässigen Anordnung, die gleichzeitig die Innenelektrode bildet.

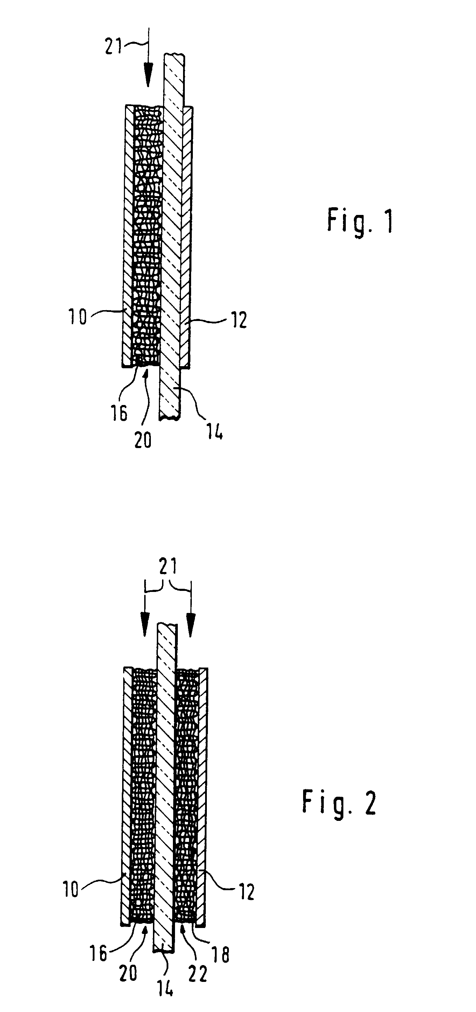

Fig. 1 zeigt einen Schnitt durch eine prinzipielle, gegebenenfalls zylindrische oder plattenförmige erfindungsgemäße Vorrichtung. Eine erste Elektrode 10 liegt auf Bezugspotential, während eine zweite Elektrode 12 auf Hochspannungspotential liegt. Im Zwischenraum zwischen den Elektroden 10 und 12 befindet sich ein Dielektrikum 14, das unmittelbar mit der zweiten Elektrode 12 in Verbindung steht. Der Zwischenraum zwischen der ersten Elektrode 10 und dem Dielektrikums 14 bildet einen Spalt 16. In diesem Spalt befindet sich eine elektrisch leitfähige und wärmeleitfähige gasdurchlässige Anordnung 20. Der Spalt 16 wird in Pfeilrichtung von sauerstoffhaltigem Gas 21 durchströmt.

Während das sauerstoffhaltige Gas 21 dem elektrischen Feld ausgesetzt wird, bewirkt eine Gasentladung eine Zerlegung des molekularen Sauerstoffs in atomaren Sauerstoff, der sich anschließend zu drei-atomigen Sauerstoffmolekülen, also Ozon verbindet. Die elektrisch leitfähige und wärmeleitfähige gasdurchlässige Anordnung 20 führt die im 16 durch die elektrische Entladung und exotherme Reaktion der Sauerstoffatome entstehende Wärme ab und bewirkt über eine Vergrößerung der Oberfläche, eine Verringerung des virtuellen Spaltes und über den Hohlkathodeneffekt eine Erhöhung der Ozonausbeute.

Statt der dargestellten Anordnung des Dielektrikums 14 unmittelbar im Kontakt zur zweiten Elektrode 12 kann das Dielektrikum 14 auch unmittelbar im Kontakt zur ersten Elektrode 10 stehen und der Spalt 16 zwischen dem Dielektrikum 14 und der zweiten Elektrode 12 gebildet sein.

Alternativ ist es möglich, statt eines Spaltes zwei Spalte vorzusehen. Fig. 2 zeigt ein entsprechendes Ausführungsbeispiel, bei dem das Dielektrikum 14 nicht unmittelbar einer der beiden Elektroden 10 oder 12 zugeordnet ist, sondern sich so zwischen den Elektroden 10 und 12 als diskretes Bauteil befindet und daß zu beiden Seiten des Dielektrikums 14 Spalte 16 und 18 gebildet sind. Im Ausführungsbeispiel weisen beide Spalte 16 und 18 elektrisch leitfähige und wärmeleitfähige gasdurchlässige Anordnungen 20 und 22 auf. Die beiden Spalte 16 und 18 können bezüglich des Gasstromes sowohl parallel als auch in Serie geschaltet werden.

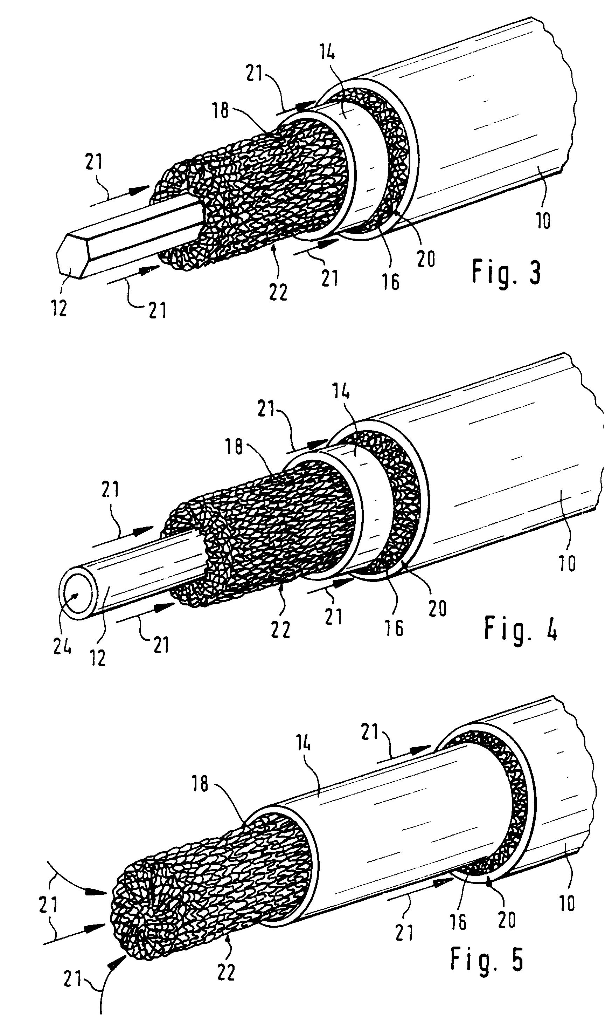

Die Figuren 3 bis 5 zeigen eine spezielle zylindersymmetrische Ausgestaltung der Vorrichtung. Eine erste äußere Elektrode 10, die auf Bezugspotential liegt, nimmt im Inneren ein zylindrisches Dielektrikum 14 und dieses wiederum eine zweite innere zylindrische Elektrode 12 auf, die auf Hochspannungspotential liegt. Sowohl zwischen der ersten Elektrode 10 und dem Dielektrikum 14 als auch zwischen dem Dielektrikum 14 und der zweiten Elektrode 12 sind Spalte 16, 18 gebildet. Diese Spalte sind jeweils mit einer elektrisch leitfähigen und wärmeleitfähigen gasdurchlässigen Anordnung 20 und 22 ausgefüllt.

Bei den Ausführungen gemäß Fig. 3 und 4 besteht die elektrisch leitfähige und wärmeleitfähige gasdurchlässige Anordnung 20, 22 aus einem strumpfartigen Gestrick aus Draht, das über die zweite Elektrode 12 als auch über das Dielektrikum 14 aufgezogen ist. Das Drahtgestrick hat einen Drahtquerschnitt von kleiner als 0,03 mm² und füllt etwa 10 % des Spaltvolumens aus. Als Material wird Edelstahl verwendet. Auch die erste und zweite Elektrode 10, 12 bestehen aus Edelstahl. Als Material für das Dielektrikum 14 wird Glas verwendet.

Bei der Ausgestaltung nach Fig. 3 ist die zweite Elektrode 12 massiv und besitzt eine polygonale Oberfläche. Diese Oberfläche erhöht nicht nur die Feldinhomogenität und die Bildung von ladungsaktiven Hohlräumen, sondern erleichtert auch das Aufziehen des Strumpfes über die zweite Elektrode 12 und die Montage im Dielektrikum 14, da einerseits die Reibung verringert ist und andererseits das Gestrick bei radialen mechanischen Belastungen auf die flachen Bereiche ausweichen kann.

Die im ersten Spalt 16 entstehende Wärme durch exotherme Reaktion wird über das strumpfartige Gestrick 20 aus Draht an die erste Elektrode 10 abgeführt. Die erste Elektrode 10 befindet sich in einem Kühlmedium, z.B. Eiswasser, das eine Wärmesenke darstellt. Die im zweiten Spalt 18 entstehende Wärme durch exotherme Redaktion wird über das strumpfartige Gestrick 22 aus Draht an die zweite Elektrode 12 abgeführt. Bei der massiven Ausführung der Elektrode 12 im Fig. 3 erfolgt die Ableitung der Wärme über die Elektrode durch Wärmeleitung zu einer Wärmesenke. Bei der Ausgestaltung gemäß Fig. 4 ist die zweite Elektrode 12 hohl und wird von einem Kühlmedium 24, z.B. einem Gas durchströmt. Dabei wird die Wärme an das Kühlmedium 24 übertragen und abgeführt.

Bei der Ausgestaltung nach Fig. 5 ist der gesamte Innenraum des Dielektrikums 14 mit einem Gewebe, Gestrick oder Geflecht aus Draht 22 gefüllt. Eine starre Elektrode ist nicht vorhanden. Vielmehr wird die Funktion der zweiten Elektrode vollständig von dem Gewebe, Gestrick oder Geflecht übernommen.

Speziell bei der erfindungsgemäßen Vorrichtung mit einer elektrisch leitfähigen und wärmeleitfähigen gasdurchlässigen Anordnung 20, 22 aus einem Gewebe, Gestrick oder Geflecht aus Draht besteht ein mehr oder weniger regelmäßiger Aufbau, der einen eigenen Zusammenhalt aufweist und eine Vielzahl von Hohlräumen umfaßt. Das zu ozonisierende Gas kann daher die Anordnung im wesentlichen frei durchströmen, ohne merklich von den Drähten behindert zu werden.

## Patentansprüche

1. Vorrichtung zur Erzeugung von Ozon aus sauerstoffhaltigen Gasen durch stille elektrische Entladung in einer Anordnung mit wenigstens einem von dem Gas durchströmten Spalt (16, 18), der zwischen einer Elektrode (10; 12) und einem Dielektrikum (14) gebildet ist, das den Spalt (16, 18) von einer weiteren Elektrode (12; 10) trennt, wobei der Spalt durch eine elektrisch leitfähige und wärmeleitfähige, gasdurchlässige Anordnung (20, 22) ausgefüllt ist, die im elektrischen Kontakt und im Wärmekontakt zur benachbarten Elektrode (12, 10) ist, dadurch gekennzeichnet, daß die Anordnung (20, 22) ein Abstandshalter mit regelmäßigem Aufbau und eigenem Zusammenhalt ist, der viele Hohlräume ausbildet, die einerseits vom gleichen Potential umgeben sind und innerhalb welcher eine Plasmaentladung nach dem Hohlkathodeneffekt stattfindet und die andererseits so miteinander in Verbindung stehen, daß Gas von einem Hohlraum zum nächsten strömen kann.

2. Vorrichtung nach Anspruch 1, dadurch gekennzeichnet, daß die Anordnung (20, 22) aus Draht als Geflecht, Gewebe oder Gestrick ausgebildet ist.

3. Vorrichtung nach Anspruch 2, dadurch gekennzeichnet, daß zwei Spalte (16, 18) vorgesehen sind, die zwischen einer ersten Elektrode (10) und einer zweiten Elektrode (12) angeordnet und durch ein gemeinsames Dielektrikum (14) getrennt sind, und daß beide Spalte (16, 18) jeweils durch die elektrisch leitfähige und wärmeleitfähige gasdurchlässige Anordnung (20, 22) ausgefüllt sind.

4. Vorrichtung nach Anspruch 2 oder 3, dadurch gekennzeichnet, daß die erste und zweite Elektrode (10, 12) und das Dielektrikum (14) plattenförmig ausgebildet sind.

5. Vorrichtung nach Anspruch 2 oder 3, dadurch gekennzeichnet, daß die erste und zweite Elektrode (10, 12) und das Dielektrikum (14) zylindersymmetrisch ausgebildet sind, wobei das Dielektrikum (14) in einem von der ersten Elektrode (10) umschlossenen Raum angeordnet ist und die zweite Elektrode (12) in einem vom Dielektrikum (14) umschlossenen Raum angeordnet ist und daß der Abstandshalter zur Zentrierung verwendet wird.

6. Vorrichtung nach Anspruch 5, dadurch gekennzeichnet, daß die zweite Elektrode (12) eine polygonale Oberfläche darbietet.

7. Vorrichtung nach Anspruch 5 oder 6, dadurch gekennzeichnet, daß die zweite Elektrode (12) massiv oder hohl ausgebildet ist.

8. Vorrichtung nach einem der Ansprüche 5 bis 7, dadurch gekennzeichnet, daß die erste Elektrode (10) in einem Kühlmedium angeordnet ist.

9. Vorrichtung nach Ansprüche 7 oder 8, dadurch gekennzeichnet, daß die zweite Elektrode (12) in ihrem hohlen Bereich von einem Kühlmedium (24) durchströmbar ist.

10. Vorrichtung nach einem der Ansprüche 5 bis 9, dadurch gekennzeichnet, daß der Innenraum des zylindersymmetrischen Dielektrikums (14) vollständig mit der elektrisch leitfähigen und wärmeleitfähigen gasdurchlässigen Anordnung (20, 22) gefüllt ist und diese Anordnung gleichzeitig die zweite Elektrode (12) bildet.

11. Vorrichtung nach einem der Ansprüche 3 bis 10, dadurch gekennzeichnet, daß die Spalte (16, 18) bezüglich des Gasstromes parallel oder in Serie geschaltet sind.

12. Vorrichtung nach Anspruch 5, dadurch gekennzeichnet, daß die Anordnung (20, 22) als Gestrick in strumpfartiger Form vorliegt und bei der Montage über die zweite Elektrode und/oder das Dielektrikum gezogen wird.

13. Vorrichtung nach einem der Ansprüche 1 bis 11, dadurch gekennzeichnet, daß die elektrisch leitfähige und wärmeleitfähige, gasdurchlässige Anordnung (20, 22) etwa 1 - 50 % vorzugsweise 4 - 20 % des Spaltvolumens ausfüllt.

14. Vorrichtung nach Anspruch 1, dadurch gekennzeichnet, daß bei Verwendung von Draht dieser eine Querschnittfläche kleiner als 0,2 mm², vorzugsweise kleiner als 0,03 mm² aufweist.

15. Vorrichtung nach einem der Ansprüche 1 bis 13, dadurch gekennzeichnet, daß die elektrisch leitfähige und wärmeleitfähige gasdurchlässige Anordnung (20, 22) aus sauerstoff- und ozonbeständigem Material besteht.

## Claims

1. Device for generating ozone from oxygen-containing gases by silent electric discharge in an arrangement with at least one gap (16, 18) with the gas flowing through it and constituted between an electrode (10; 12) and a dielectric (14) that separates the gap (16, 18) from another electrode (12; 10), wherein the gap (16; 18) is filled up with an electrically and thermally conductive gas-permeable arrangement (20, 22) that is in electrical and thermal contact with the adjacent electrode (10; 12), characterized in that the arrangement (20, 22) is a spacer having a regular structure and inherent cohesion, which spacer comprises a multiplicity of hollow spaces, which on one hand are surrounded by the same potential and in which a plasma discharge according to the hollow-cathode effect takes place and which on the other hand are interconnected in such a way that gas can flow from one hollow space to the next one.

2. Device according to claim 1, characterized in that the arrangement (20, 22) is in the form of a plait, woven or knit.

3. Device according to claim 2, characterized in that, two gaps (16, 18) are provided that are constituted between a first electrode (10) and a second electrode (12) and separated by a common dielectric (14) and in that both gaps (16,18) are each filled by the electrically and thermally conductive gas-permeable arrangement (20, 22).

4. Device according to claim 2 or 3, characterized in that the first and second electrode (10, 12) and the dielectric (14) are plate-shaped.

5. Device according to claim 2 or 3, characterized in that the first and second electrode (10, 12) and the dielectric (14) are constructed cylindrically symmetrically, whereby the dielectric (14) is disposed in a space enclosed by the first electrode and the second electrode is disposed in a space enclosed by the dielectric (14), and that the spacer is used for centering.

6. Device according to claim 5, characterized in that the second electrode (12) presents a polygonal surface.

7. Device according to claim 5 or 6, charcterized in that the second electrode is constructed solid or hollow.

8. Device according to one of claims 5 through 7, characterized in that the first electrode (10) is preferably disposed in a coolant.

9. Device according to claims 7 or 8, characterized in that the hollow region of the second electrode (12) has a coolant (24) flowing through it.

10. Device according to one of claims 5 through 9, characterized in that the inside of the cylindrical dielectric (14) is completely filled with the electrically and thermally conductive gas-permeable arrangement (20, 22) and the arrangement simultaneously constitutes the second electrode (12).

11. Device according to one of claims 3 through 10, characterized in that the gaps (16, 18) are aligned parallel to or in series in relation to the flow of gas.

12. Device according to claim 5, characterized in that the arrangement is a knit in hosiery shape and is drawn during assembly over the second electrode and/or the dielectric.

13. Device according to one of claims 1 through 11, characterized in that the electrically and thermally conductive gas-permeable arrangement (20, 22) fills about 1 to 50 % and preferably 4 to 20 % of the gap volume.

14. Device according to claim 1, characterized in that, when wire is used, it will exhibit a cross-sectional area smaller than 0.2mm² and preferably smaller than 0.03 mm².

15. Device according to one of claims 1 through 13 characterized in that the electrically and thermally conductive gas-permeable arrangement (20, 22) consists of oxygen- and ozone-resistant material.

## Revendications

1. Dispositif pour la génération d'ozone à partir de gaz contenant de l'oxygène, par une décharge électrique silencieuse dans une disposition comprenant du moins une fente (16,18) au travers de laquelle passe le gaz et qui est formée entre une électrode (10; 12) et un diélectrique (14) lequel sépare ladite fente (16,18) d'une autre électrode (12; 10), la fente étant remplie par une disposition (20, 22) perméable au gaz, électriquement et thermiquement conductible qui est en contact électrique et en contact thermique avec l'électrode voisine (12, 10), caractérisé par le fait que la disposition (20, 22) est un écarteur avec une construction régulière et une propre consistance, qui forme beaucoup d'espaces vides qui, d'un côté, sont entourés du même potentiel et à l'intérieur desquels a lieu une décharge de plasma d'après l'effet de cathode évidée, et qui, de l'autre côté, communiquent entre eux d'une telle manière que du gaz peut passer d'un espace vide à l'autre.

2. Dispositif selon la revendication 1, caractérisé par le fait que la disposition (20, 22) est réalisée en fil en tant que tresse, tissu ou tricotage.

3. Dispositif selon la revendication 2, caractérisé par le fait que l'on prévoit deux fentes (16, 18) qui sont disposées entre une première électrode (10) et une deuxième électrode (12) et qui sont séparées par un diélectrique commun (14), et que les deux fentes (16, 18) sont remplies respectivement par la disposition (20, 22) perméable au gaz, électriquement et thermiquement conductible.

4. Dispositif selon la revendication 2 ou 3, caractérisé par le fait que la première et la deuxième électrode (10, 12) et le diélectrique (14) présentent la forme de plaques.

5. Dispositif selon la revendication 2 ou 3, caractérisé par le fait que la première et la deuxième électrode (10, 12) ainsi que le diélectrique (14) sont réalisés de façon cylindrosymétrique, le diélectrique (14) étant disposé dans un espace enclos par la première électrode (10) et la deuxième électrode (12) étant disposée dans un espace enclos par le diélectrique (14), et que l'écarteur est utilisé pour le centrage.

6. Dispositif selon la revendication 5, caractérisé par le fait que la deuxième électrode (12) présente une surface polygonale.

7. Dispositif selon la revendication 5 ou 6, caractérisé par le fait que la deuxième électrode (12) est construite de manière à être massive ou creuse.

8. Dispositif selon l'une des revendications 5 à 7, caractérisé par le fait que la première électrode (10) est disposée dans un milieu refroidisseur.

9. Dispositif selon les revendications 7 ou 8, caractérisé par le fait que la zone creuse de la deuxième électrode (12) peut être traversée par un milieu refroidisseur (24).

10. Dispositif selon l'une des revendications 5 à 9, caractérisé par le fait que l'intérieur du diélectrique (14) cylindrosymétrique est complètement rempli de la disposition (20, 22) perméable au gaz, électriquement et thermiquement conductible et que cette disposition constitue en même temps la deuxième électrode (12).

11. Dispositif selon l'une des revendications 3 à 10, caractérisé par le fait que les fentes (16, 18) sont alignées parallèlement ou en série par rapport au courant de gaz.

12. Dispositif selon la revendication 5, caractérisé par le fait que la disposition (20, 22) est présente en tant que tricotage dont la forme ressemble à un bas, et que, lors du montage, elle est mise sur la deuxième électrode et/ou le diélectrique.

13. Dispositif selon l'une des revendications 1 à 11, caractérisé par le fait que la disposition (20, 22) perméable au gaz, électriquement et thermiquement conductible occupe à peu près entre 1 et 50 %, de préférence entre 4 et 20 % du volume de fente.

14. Dispositif selon la revendication 1, caractérisé par le fait que, lorsqu'on utilise du fil, celui-ci présente une aire de la section, qui est plus petite que 0,2 mm², de préférence plus petite que 0,03 mm².

15. Dispositif selon l'une des revendications 1 à 13, caractérisé par le fait que la disposition (20, 22) perméable au gaz, électriquement et thermiquement conductible se compose d'une matière résistante à l'oxygène et à l'ozone.
